# EUROPÄISCHE PATENTSCHRIFT

(11) **EP 3 077 136 B1**
(45) Veröffentlichungstag und Bekanntmachung des Hinweises auf die Patenterteilung: **06.09.2017**
(21) Anmeldenummer: 14786489.6
(22) Anmeldetag: 16.10.2014
(51) Int. Cl.: B21F 27/12, F03D 1/00

(54) **ANLAGE ZUR HERSTELLUNG VON BEWEHRUNGSKÖRBEN FÜR TURMSEGMENTE VON WINDENERGIEANLAGEN**
INSTALLATION FOR PRODUCING REINFORCEMENT CAGES FOR TOWER SEGMENTS OF WIND TURBINES
INSTALLATION PERMETTANT DE PRODUIRE DES CAGES D'ARMATURE POUR DES SEGMENTS DE MÂT D'ÉOLIENNES

(30) Priorität: 05.12.2013 DE 102013225049
(43) Veröffentlichungstag der Anmeldung: 12.10.2016
(73) Patentinhaber: Wobben Properties GmbH, 26607 Aurich (DE)
(72) Erfinder: KRÜGER, Georg, 26725 Emden (DE); MEYER, Ingo, 26639 Wiesmoor (DE); ALBERS, Karsten, 26759 Hinte (DE)
(74) Vertreter: Eisenführ Speiser
(86) Internationale Anmeldenummer: PCT/EP2014/072205
(87) Internationale Veröffentlichungsnummer: WO 2015/082115

(56) Entgegenhaltungen:
- EP-A2- 0 947 257
- DE-A1- 3 634 736
- NL-C2- 1 030 978

## Beschreibung

Die vorliegende Erfindung betrifft eine Anlage zur Herstellung von Bewehrungskörben für Turmsegmente von Windenergieanlagen, wobei ein Bewehrungskorb jeweils im Wesentlichen horizontal ausgerichtete Ringelemente und im Wesentlichen vertikal ausgerichtete Versteifungselemente aufweist (siehe z.B. die gattungsgemäße DE 36 34 736 A1). Türme, wie sie unter anderem für Windenergieanlagen zur Anwendung kommen, haben oftmals eine Wandung aus Beton bzw. Stahlbeton. Insbesondere bei dynamisch belasteten Türmen, was auf die meisten Türme aufgrund der Windeinflüsse zutrifft, werden zur Verbesserung der Stabilität zusätzlich versteifende Strukturen, sogenannte Bewehrungskörbe, im Inneren der Turmwandung vorgesehen. Die Konstruktion eines Turms ist hierbei segmentartig aufgebaut, d. h., ein Turm wird zusammengesetzt aus mehreren übereinanderzulegenden, im Wesentlichen ringförmigen Turmsegmenten.

In der Herstellung solcher Turmsegmente wird zunächst der Bewehrungskorb hergestellt und sodann mit Beton in dafür vorgesehene Formen umfüllt und ausgehärtet.

Bei bekannten Vorrichtungen zur Herstellung von Bewehrungskörben für Turmsegmente ist eine Tragstruktur vorgesehen, weiche eine Vielzahl von Stangen, sogenannten Rechen, hält. Diese Stangen weisen jeweils Aufnahmen zur Aufnahme von Betonstahldraht auf, wobei der Betonstahl um die Tragstruktur herum geführt wird, bzw. die Tragstruktur in Rotation versetzt wird um Ringelemente zu bilden. Diese Ringelemente werden mit im Wesentlichen orthogonal zu den Ringen oder im Wesentlichen vertikal verlaufenden bügelförmigen (Stahl-) Versteifungselementen verknüpft, wodurch ein gitterförmiger Bewehrungskorb entsteht.

Der Betonstahldraht wird entweder in einer Kreisbewegung um eine stationäre Tragstruktur herumgeführt oder, was bevorzugt ist, befindet sich in einer stationären Zuführeinrichtung und wird von der rotatorisch antreibbaren Tragstruktur aus der Aufnahme gezogen und legt sich infolge der Rotationsbewegung der Tragstruktur ringförmig um diese herum. Während der gesamten Zeit wird die Form der ringförmigen Stahllitzen von der Tragstruktur und den Stangen mittels einer Vielzahl von Speichen stabilisiert, die sich zwischen der Tragstruktur und den Stangen erstrecken. Zum Entfernen der Bewehrungskörbe aus der Vorrichtung müssen die Speichen bei bekannten Systemen jeweils zurückgerüstet oder die stabilisierenden Stangen einzeln und manuell aus dem fertigen Korb ausgehakt werden.

Je nach Größe der herzustellenden Turmsegmente weisen bereits die Bewehrungskörbe ein beträchtliches Gewicht und, dem Turmsegment entsprechend, beträchtliche Ausmaße auf. Beispielsweise weist ein Bewehrungskorb für das unterste, also größte Turmsegment einer Windenergieanlage des Typs E126 der Firma ENERCON einen Durchmesser von ca. 14m, eine Höhe von ca. 3,7m und ein Gewicht von ca. 8,5t auf. Aufgrund ihrer gitterartigen Struktur und der enormen Ausmaße sind Bewehrungskörbe im Fertigungsbetrieb nur schwer mit konventionellen Kransystemen handhabbar.

Aus DE 10 2012 221 453 ist eine Greifeinrichtung zum Handhaben solcher Bewehrungskörbe bekannt.

Neben dem Handhaben der Bewehrungskörbe besteht bei den bekannten Fertigungsumgebungen allerdings der Bedarf, die Verknüpfung der im Wesentlichen vertikalen Elemente mit den im Wesentlichen horizontalen Ringelementen der Bewehrungskörbe effizienter zu gestalten, und diese gleichzeitig mit der vorstehend bezeichneten bekannten Greifeinrichtung handhaben zu können.

Der Erfindung lag somit die Aufgabe zugrunde, eine Anlage der eingangs bezeichneten Art anzugeben, die eine effiziente Herstellung der Bewehrungskörbe gewährleistet. Insbesondere war es auch Aufgabe der zugrundeliegenden Erfindung, jene Anlage in Kombination mit beispielsweise der vorbezeichneten bekannten Greifeinrichtung gemeinsam verwenden zu können.

Die Erfindung löst die ihr zugrundeliegende Aufgabe mit einer Anlage gemäß Anspruch 1 oder 2.

Der Erfindung liegt die Erkenntnis zugrunde, dass durch die Verwendung eines ersten und zweiten Handhabungsroboters die Anzahl der manuellen Arbeiten reduziert werden kann, die Arbeitssicherheit insgesamt erhöht wird, und eine verbesserte Arbeitsplanung ermöglicht wird. Es hat sich überraschend herausgestellt, dass trotz des komplexen Anlagenaufbaus und der vielen Freiheitsgrade im Betrieb ein zeiteffizientes Herstellen von Bewehrungskörben möglich ist.

Gemäß der vorliegenden Erfindung können verschiedene Arten von Versteifungselementen ausgebildet werden, um Teil des Bewehrungskorbs zu werden. Gemäß einem ersten Aspekt sind die Versteifungselemente aus einem wendelförmig gebogenen Endlosmaterial ausgebildet. Besonders bevorzugt sind die Versteifungselemente aus einem einzigen, entlang des Umfangs der Ringelemente vollständig umlaufenden wendelförmig gebogenen Stahldraht ausgebildet. Diese Struktur wird auch als Steher-Helix bezeichnet. Eine solche Ausgestaltung der Versteifungselemente hat den Vorteil, dass eine separate und damit mit Transportaufwand verbundene Biege- und Schweißeinrichtung zur Bereitstellung der Versteifungselemente entfallen kann.

Der erste Handhabungsroboter ist somit dazu eingerichtet, diese Struktur entlang der im Wesentlichen horizontalen Ringelemente auszubilden und anzuordnen.

Gemäß diesem ersten Aspekt weist der erste Handhabungsroboter Biegemittel auf, und wirkt mit einer Zuführeinheit zusammen, die den Biegemitteln das Endlosmaterial zuführt, wobei die Biegemittel dazu eingerichtet sind, das zugeführte Endlosmaterial derart zu biegen, dass die Versteifungsmittel daraus wendeiförmig ausgebildet werden.

Die Biegemittel weisen vorzugsweise Umlenkrollen auf, zwischen welchen das Endlosmaterial hindurchgeführt wird, wobei die Positionen der Umlenkrollen relativ zueinander veränderbar sind. Vorzugsweise sind die Positionen der Umlenkrollen relativ zueinander derart veränderbar, dass unterschiedliche Biegeradien und Biegerichtungen in das Endlosmaterial eingebracht werden können.

Die Anordnung der Umlenkrollen kann beispielsweise nach Art von Rohrbiegewerkzeugen ausgeführt sein.

In einer anderen bevorzugten Ausführungsform sind die Biegemittel stationär an der Korbherstellungsanlage angeordnet, wobei ein Handhabungsroboter vorzugsweise nicht das Biegen an sich sondern nur die Handhabung des gebogenen Betonstahls übernimmt.

Gemäß einem zweiten Aspekt der Erfindung sind die Versteifungselemente als separate, vorzugsweise geschlossene, Bügel ausgebildet. Diese Ausgestaltung hat den Vorteil, dass das Anordnen der einzelnen Versteifungselemente um die Ringelemente herum flexibler gehandhabt werden kann und der Handhabungsprozess einfacher beherrschbar ist. In der Ausgestaltung gemäß diesem Erfindungsaspekt werden die Versteifungselemente in einem separaten Herstellungsverfahren vorgefertigt und sodann in größeren Ansammlungen bevorratet.

Gemäß diesem zweiten Aspekt weist der erste Handhabungsroboter Greifmittel zum rutschsicheren Fassen und Entnehmen der Versteifungselemente von einer Bevorratungseinheit auf. Unter rutschsicher wird hierbei verstanden, dass die Greifmittel die Versteifungselemente entweder formschlüssig ergreifen, oder derart kraftschlüssig, dass unter Berücksichtigung der bei der Bewegung der Handhabungsroboter zu erwartenden Beschleunigungen Haftreibung, aber keine Gleitreibung zwischen den Greifmitteln und den Versteifungselementen auftritt, und selbstverständlich auch kein Lösen der Greifmitteln von den Versteifungselementen.

Vorzugsweise sind die Greifmittel dazu eingerichtet, das Versteifungselement an gegenüberliegenden Enden des Versteifungselements in jeweils mindestens einer Ecke von innen zu ergreifen.

Gemäß einer weiteren bevorzugten Ausführungsform weisen die Greifmittel ein erstes und zweites schwenkbares Koppelglied auf, welches dazu eingerichtet ist, das Versteifungselement in jeweils mindestens einer Ecke mittels Verschwenken zu ergreifen.

Die Koppelglieder weisen vorzugsweise jeweils eine Führungsrolle zum Greifen des Versteifungselements, vorzugsweise von innen, in einer Ecke auf, sowie vorzugsweise einen Stützabschnitt oder eine weitere Rolle an einem gegenüberliegenden Ende des Koppelglieds. Der Stützabschnitt oder die weitere Rolle sind vorzugsweise jeweils derart angeordnet, dass beim Verschwenken des Koppelglieds eine ausreichende Spreizkraft auf das Versteifungselement ausgeübt wird, dass der erste Handhabungsroboter das Versteifungselement rutschsicher heben, senken und verfahren kann.

Die Erfindung wird vorzugsweise weitergebildet, indem die Anlage eine elektronische Steuereinheit aufweist, welche dazu eingerichtet ist, den ersten und zweiten Handhabungsroboter zum koordinierten Bereitstellen der Versteifungselemente und zum Verbinden der Versteifungselemente mit den Ringelementen zu steuern. Vorzugsweise weist die elektronische Steuereinheit hierzu einen oder mehrere rechnergestützte Arbeitsplätze auf, die zum Einlesen und Verarbeiten einer virtuellen Darstellung des herzustellenden Bewehrungskorbes und der den Bewehrungskorb herstellenden Anlage inklusive der Handhabungsroboter eingerichtet sind. Die virtuelle Darstellung kann in Form von CAD-Daten und/oder CAD/CAM-Daten bereitgestellt sein. Vorzugsweise sind in der elektronischen Steuereinheit Datensätze hinterlegt, die ein bestimmtes Bewegungsmuster der Handhabungsroboter mit einem jeweils herzustellenden Typus eines Bewehrungskorbes verknüpfen. Bewehrungskörbe haben je nachdem, für welches Turmsegment sie verwendet werden sollen, unterschiedliche Größen. Diese können beispielsweise in Datenspeichern hinterlegt werden, und die elektronische Steuereinheit ist vorzugsweise dazu eingerichtet, auf diese zuzugreifen, die entsprechenden Datensätze auszulesen und in Arbeitsanweisungen für den ersten und zweiten Handhabungsroboter umzusetzen.

In einer bevorzugten Ausführungsform der Erfindung ist der Aufnahmebereich auf einer drehbaren Plattform angeordnet. Vorzugsweise sind der erste und zweite Handhabungsroboter ortsfest benachbart zu der Plattform angeordnet, und/oder vorzugsweise radial zum Mittelpunkt der Plattform verstellbar. Indem die Handhabungsroboter benachbart zu der vorzugsweise drehbaren Plattform angeordnet sind, wird eine verbesserte Platzausbeute der Herstellungsumgebung erzielt. Bewehrungskörbe für Turmsegmente sind im Wesentlichen zylindrisch oder kegelstumpfrohrförmig ausgebildet, so dass eine Rotation der Bewehrungskörbe auf der Aufnahmeplattform keinen zusätzlichen Platzbedarf in irgendeine Richtung erfordert.

Gemäß einer weiteren bevorzugten Ausführungsform ist der Aufnahmebereich zum Zusammenwirken mit einer Greifeinrichtung zum Handhaben eines Bewehrungskorbs eingerichtet. Die Greifeinrichtung ist vorzugsweise gemäß der DE 10 2012 221 453 ausgebildet.

Weiter vorzugsweise ist der erste Handhabungsroboter dazu eingerichtet, die Versteifungselemente im Wesentlichen vertikal ausgerichtet mit den Ringelementen in Anlage zu bringen. Hierbei ist es unbeachtlich, wenn einzelne Ringelemente nicht in Anlage mit den Versteifungselementen gebracht werden. Maßgeblich ist es, dass diejenigen Versteifungselemente und Ringelemente miteinander in Anlage gebracht werden, an deren Schnittstellen nachfolgend durch den zweiten Handhabungsroboter eine Verbindung herbeigeführt werden soll. Unter der Angabe "im Wesentlichen vertikal" wird erfindungsgemäß auch ein solcher Neigungswinkel zur Vertikalen verstanden, wie er beispielsweise durch einen schrägen, wendelförmigen Verlauf entstehen kann, beispielsweise in einem Bereich von ± 1 bis 10°.

Gemäß einer weiteren bevorzugten Ausführungsform der Erfindung weist der zweite Handhabungsroboter einen schwenkbaren Arbeitskopf auf, an welchem ein Verbindemittel angeordnet ist, ausgewählt aus der Liste bestehend aus:
- Klebstoffabgabevorrichtung,
- Schweißvorrichtung,
- Lötvorrichtung,
- Vorrichtung zum automatischen Verdrillen von Metalldrähten.

Die Vorrichtung zum automatischen Verdrillen von Metalldrähten ist vorzugsweise ausgebildet wie bekannt aus DE 10 2012 216 831.

Die obigen Ausführungen haben jeweils Bezug genommen auf Ringelemente im Allgemeinen. Diese können als ein erster Satz Ringelemente aufgefasst werden, wenn in einer bevorzugten Ausführungsform die Anlage einen dritten Handhabungsroboter zum Bereitstellen eines zweiten Satzes im Wesentlichen horizontal ausgerichteter, vorzugsweise äußerer, Ringelemente aufweist, wobei die Ringelemente als separate, vorzugsweise geschlossene, Ringe ausgebildet sind, oder aus einem wendelförmig gebogenen Endlosmaterial ausgebildet sind. Die elektronische Steuereinheit ist vorzugsweise ebenso dazu eingerichtet, auch den dritten Handhabungsroboter koordiniert mit dem ersten und zweiten Handhabungsroboter zu steuern, insbesondere auf Basis einer entsprechenden virtuellen Darstellung.

Vorzugsweise weist der dritte Handhabungsroboter eine Führungseinrichtung, vorzugsweise mit einer oder mehreren Führungsrollen, auf und wirkt mit einer Zuführeinheit zusammen, die der Führungseinrichtung das Endlosmaterial zuführt, wobei die Führungseinrichtung dazu eingerichtet ist, das zugeführte Endlosmaterial derart zu führen, dass der zweite Satz Ringelemente wendelförmig ausgebildet wird.

Der zweite Handhabungsroboter ist vorzugsweise ferner dazu eingerichtet, auch den zweiten Satz Ringelemente mit den Versteifungselementen zu verbinden.

Die elektronische Steuereinheit ist vorzugsweise dazu eingerichtet, den zweiten und dritten Handhabungsroboter, vorzugsweise sämtliche Handhabungsroboter der Anlage, zum koordinierten Bereitstellen des zweiten Satz Ringelemente und Verbinden der Versteifungselemente mit dem zweiten Satz Ringelemente zu steuern. Hierbei wird vorzugsweise auf die gleichen Mittel und Ressourcen zurückgegriffen wie in Bezug auf den ersten und zweiten Handhabungsroboter.

Die Erfindung wird im Folgenden unter Bezugnahme auf die beigefügten Figuren anhand bevorzugter Ausführungsbeispiele näher erläutert. Hierbei zeigen:
- Figuren 1a, b: eine schematische Teilansicht einer Anlage gemäß einem ersten Ausführungsbeispiel,
- Figuren 2a-g: unterschiedliche Arbeitsstellungen des ersten Handhabungsroboters gemäß dem ersten Ausführungsbeispiel,
- Figuren 3a-c: unterschiedliche schematische Teilansichten einer Anlage gemäß einem zweiten Ausführungsbeispiel,
- Figuren 4a-c: unterschiedliche schematische Teilansichten einer Anlage gemäß einem dritten Ausführungsbeispiel,
- Figuren 5a,b: unterschiedliche Arbeitsstellungen und schematische Teilansichten eines dritten Handhabungsroboters, exemplarisch für das zweite Ausführungsbeispiel, und
- Figuren 6a-c: unterschiedliche Arbeitsstellungen eines weiteren Handhabungsroboters für eine Anlage gemäß einem der Ausführungsbeispiele, exemplarisch am ersten Ausführungsbeispiel abgebildet.

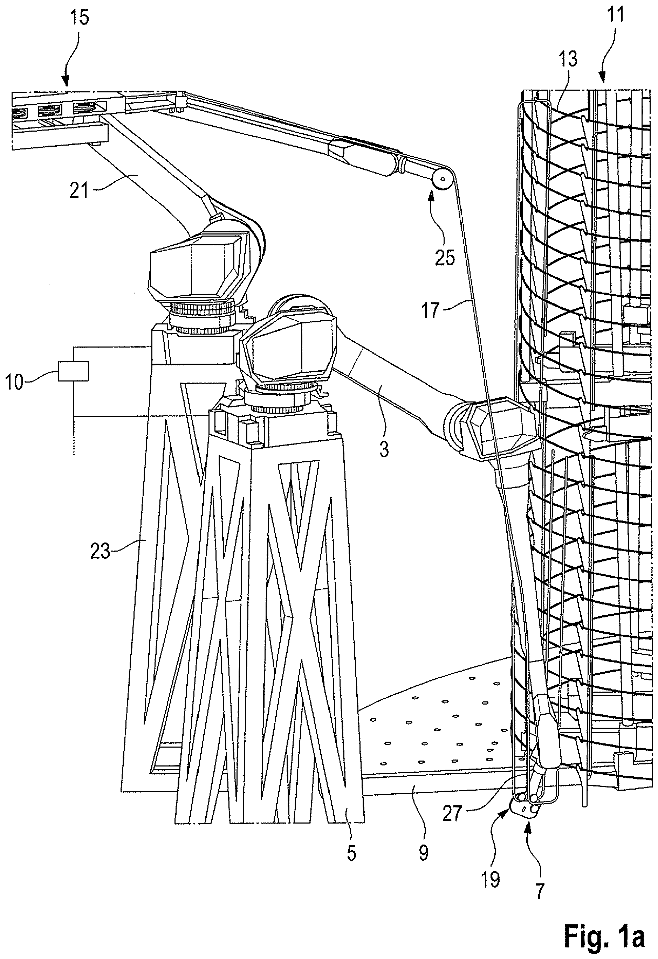

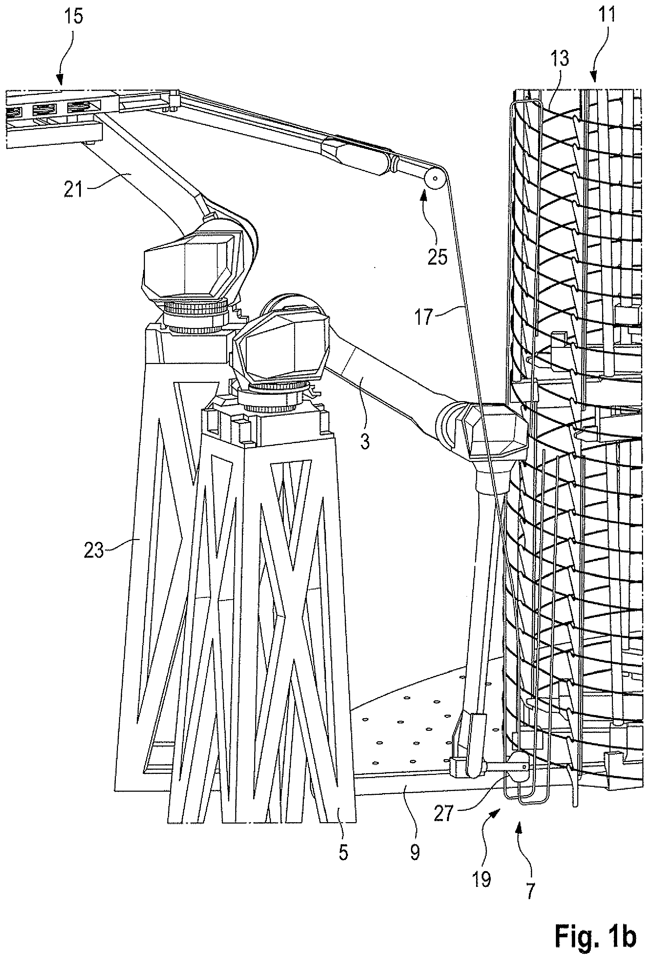

In Figur 1a ist eine Anlage 1 gemäß einem ersten Ausführungsbeispiel der Erfindung gezeigt. Die Anlage 1 weist einen ersten Handhabungsroboter 3 auf, der zum Ausbilden wendelförmig angeordneter Versteifungselemente 27 mittels entsprechender Biegemittel ausgebildet ist. Der erste Handhabungsroboter 3 weist einen Arbeitskopf mit einer Biegeeinrichtung 19 auf. Der erste Handhabungsroboter 3 ist gemäß Figuren 1a, b auf einer Tragstruktur 5 angeordnet. Diese kann ein Podest wie in Figuren 1a, b, oder eine andere Tragstruktur, wie beispielsweise in einem der weiteren Ausführungsbeispiele gezeigt, sein.

Die Anlage 1 weist einen Aufnahmebereich 7 auf. Der Aufnahmebereich 7 ist dazu eingerichtet, eine Greifeinrichtung 11 aufzunehmen. Die Greifeinrichtung 11 weist Kopplungsmittel, beispielsweise in Form von hakenförmigen Rechenarmen auf, auf denen jeweils im Wesentlichen horizontal ausgerichtete Ringelemente 13 angeordnet werden. Der Aufnahmebereich 7 ist auf einer vorzugsweise drehbaren Plattform 9 angeordnet. Die Plattform 9 ist vorzugsweise datenleitend mit einer elektronischen Steuereinheit verbunden, so dass die Rotation entsprechend des Arbeitsfortschritts der Handhabungsroboter 3 und 21 mittels der elektronischen Steuereinheit koordiniert erfolgen kann.

Der erste Handhabungsroboter 3 ist mittels einer elektronischen Steuereinrichtung unter anderem mit einer Zuführeinheit 15 verbunden und wirkt mit dieser zusammen, damit die Zuführeinheit 15 dem Handhabungsroboter 3 ein Endlosmaterial 17 zum Herstellen der wendelförmigen Versteifungselemente 27 zuführen kann.

Die Anlage 1 weist ferner einen zweiten Handhabungsroboter 21 auf, welcher einen Arbeitskopf 25 mit einem Verbindemittel, beispielsweise ausgebildet als Schweißrad, aufweist. Der zweite Handhabungsroboter 21 ist vorzugsweise ebenfalls mit der elektronischen Steuereinheit verbunden und wirkt koordiniert mit dem ersten Handhabungsroboter 3 und der Plattform 9 zusammen, um die erzeugten Versteifungselemente 27 mit den im Wesentlichen horizontal ausgerichteten Ringelementen 13, die von der Greifeinrichtung 11 gehalten werden, zu verbinden. Der zweite Handhabungsroboter 21 kann beispielsweise auf einer Tragstruktur 23 benachbart zu dem Aufnahmebereich 7 angeordnet sein, oder auf einer alternativen Tragstruktur gemeinsam mit dem ersten Handhabungsroboter, wie beispielsweise in den folgenden Ausführungsbeispielen gezeigt wird.

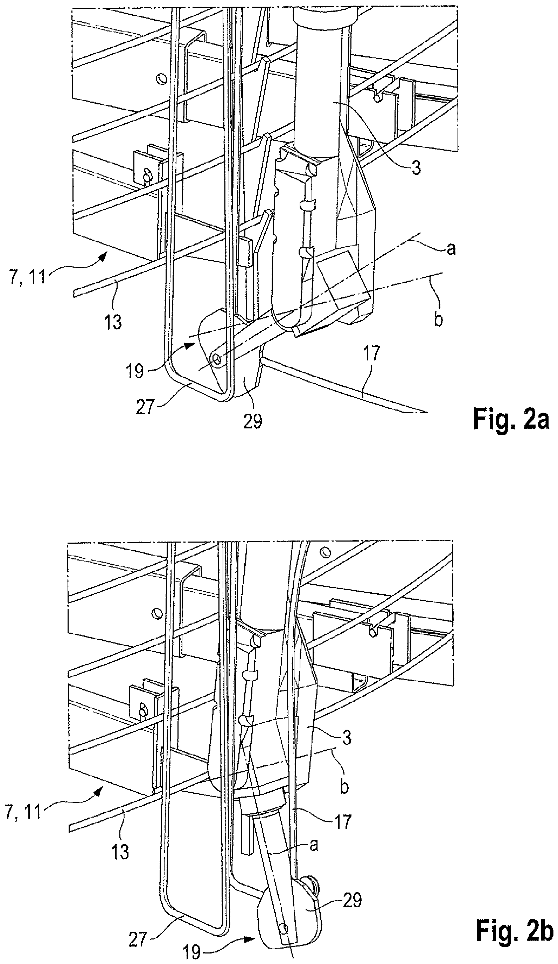

Der erste Handhabungsroboter 3 ist mehrachsig bewegbar, um den Arbeitskopf 19 zum Erzeugen von Biegungen in dem Endlosmaterial 17 derart zu ermöglichen, dass die im Wesentlichen vertikal ausgerichteten Versteifungselemente 27 entstehen. Der Arbeitskopf 19 ist hierzu auch rekonfigurierbar und umsetzbar, wie in Figur 1b gezeigt wird, und insbesondere im Detail in den Figuren 2a bis 2g dargestellt wird.

Die Anlage weist ferner eine elektronische Steuereinrichtung 10 zum koordinierten Steuern der Handhabungsroboter 3, 21 und der Plattform 9 auf.

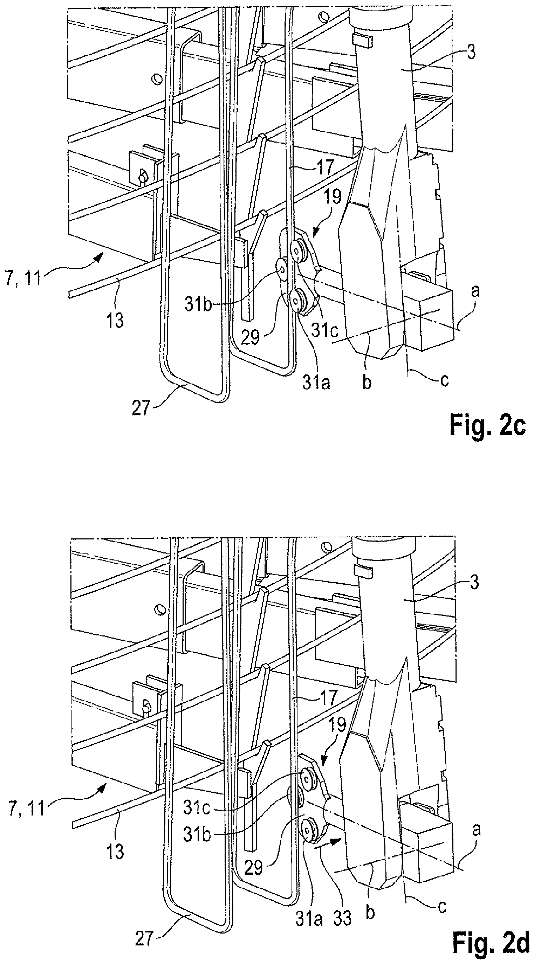

In den Figuren 2a bis 2g ist ein Ausschnitt der Anlage 1 gemäß dem ersten Ausführungsbeispiel gezeigt, in welchem der Arbeitskopf 19 des ersten Handhabungsroboters 3 im Betrieb gezeigt wird. In den Figuren ist ein ersten im Wesentlichen vertikal ausgerichtetes Versteifungselement 27 bereits angrenzend an die Ringelemente 13 im Aufnahmebereich 7 erstellt worden. Der Arbeitskopf 19 weist einen Grundkörper 29 auf, an dem mehrere Umlenkrollen 31a,b, c (Figuren 2c bis 2g) angeordnet sind. In Figur 2a ist eine erste Umbiegung für ein Versteifungselement 27 erzeugt worden. Das Endlosmaterial 17 ist ausgehend von dem Zustand gemäß Figur 2a in Figur 2b durch Hinzufügen einer weiteren Umbiegung weiter verformt worden. Hierzu hat der erste Handhabungsroboter 3 eine entsprechende Schwenkbewegung um eine Arbeitsachse b durchgeführt. Um die Umbiegung des Endlosmaterials 17 fertigzustellen, setzt der erste Handhabungsroboter 3 vom Zustand gemäß Figur 2b aus kurz ab und schwenkt den Rumpf des Handhabungsroboters 3 nach außen um, damit der erste Handhabungsroboter 3 beim weiteren Führen des Endlosmaterials 17 nach oben zur nächsten herzustellenden Umbiegung nicht kollidiert.

Der mit Biegemitteln in Form einer Biegeeinrichtung ausgebildete Arbeitskopf 19 des ersten Handhabungsroboters 3 weist verstellbare Umlenkrollen 31a, b, c auf, die an dem Grundkörper 29 angeordnet sind. Eine beispielhafte Umstellung der Rollenpositionen, verbunden mit einer Umsetzbewegung des Arbeitskopfes 19 sind in den Figuren 2c bis 2g illustriert.

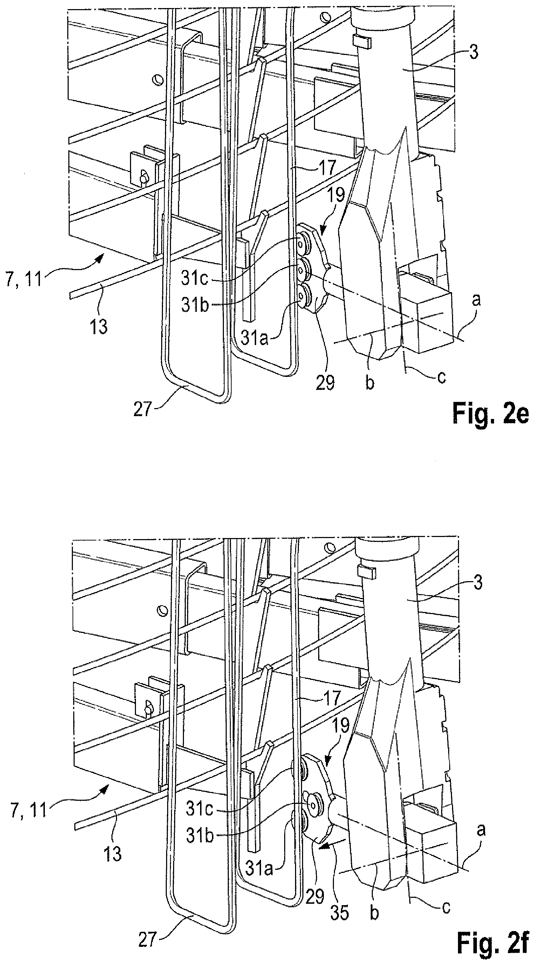

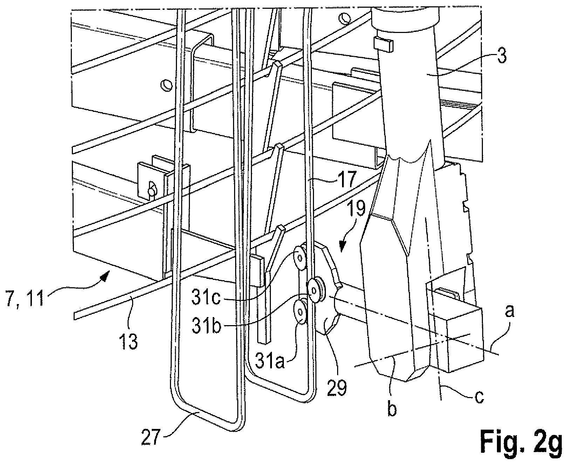

In Figur 2c befindet sich der Arbeitskopf 19 an dem ersten Handhabungsroboter 3 zunächst noch in Eingriff mit dem Endlosmaterial 17. Um ein Verdrillen des Endlosmaterials 17 mit dem Handhabungsroboter 3 zu vermeiden, wird in Figur 2d der Arbeitskopf 19 um eine Achse c an dem ersten Handhabungsroboter 3 in Richtung des Pfeils 33 verschwenkt, so dass die Rollen 31a, b, c außer Eingriff mit dem Endlosmaterial 17 gebracht werden. Wie sich sodann aus Figur 2e ergibt, werden die Positionen der Rollen 31a und 31c in eine erste Richtung verändert, während die zwischen den Umlenkrollen 31a, c angeordnete Umlenkrolle 31b in die entgegengesetzte Richtung versetzt wird. Die Repositionierung der Umlenkrollen 31a, b, c kann entweder stufenlos oder gerastert erfolgen, beispielsweise durch Umsetzen in dedizierte Öffnungen. Nach einer erfolgten Umstellung, die in Figur 2f gezeigt ist, wird der Arbeitskopf 19 in Richtung des Pfeils 35 wieder um die Achse c verschwenkt, so dass die Umlenkrollen 31a, b, c erneut in Eingriff mit dem Endlosmaterial 17 stehen. Dieser Zustand ist in Figur 2g abgebildet. In den Figuren 2c bis 2g ist die Rotationsposition des Grundkörpers 29 relativ zum ersten Handhabungsroboter 3 konstant. Es ist optional aber auch möglich, den Grundkörper 29 des Arbeitskopfes 19 um eine Achse a zu verschwenken, wie z.B. im Vergleich von Figur 2b mit 2c offenbar wird.

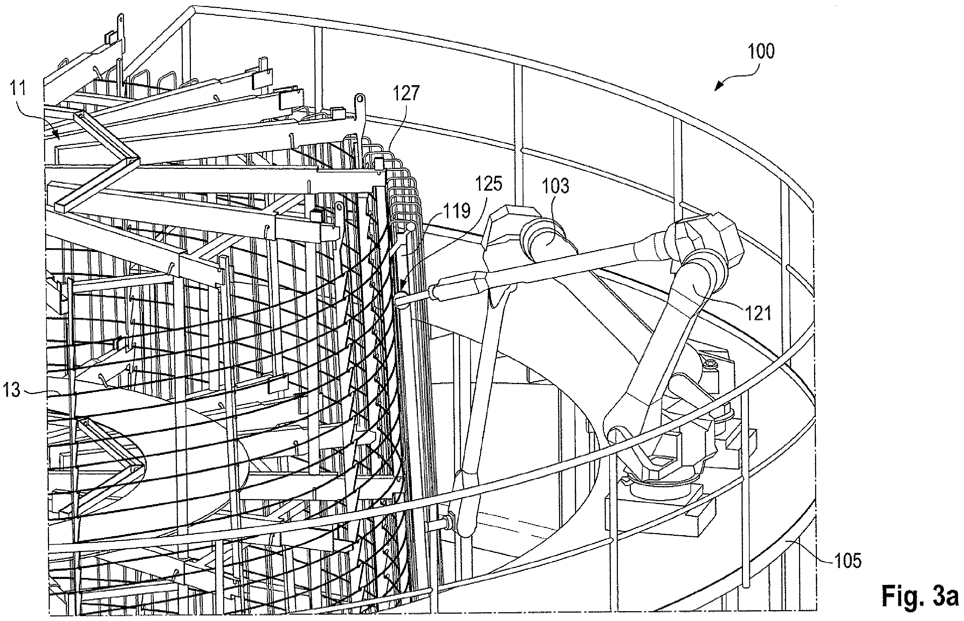

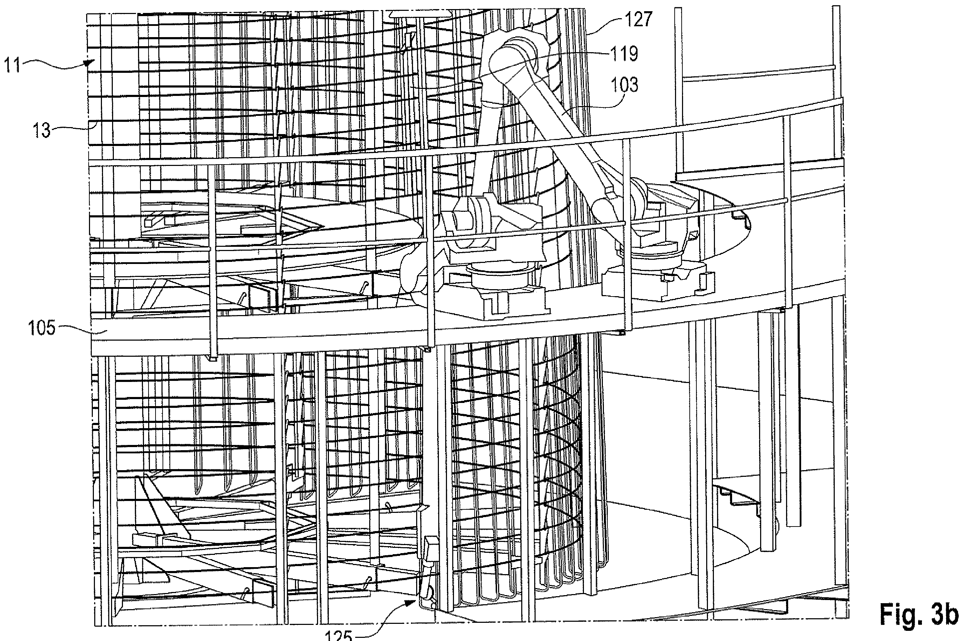

Die Figuren 3a, b zeigen schematisch einen Ausschnitt einer Anlage 100 gemäß einem zweiten Ausführungsbeispiel der Erfindung. Die wesentlichen erfinderischen Merkmale sind die gleichen wie beim ersten Ausführungsbeispiel. Insbesondere die Art der Anordnung eines ersten Handhabungsroboters 103 der Anlage 100 und eines zweiten Handhabungsroboters 121 der Anlage 100 sind im Prinzip mit der Anordnungsart bei der Anlage 1 austausch- oder kombinierbar. Der erste Handhabungsroboter 103 der Anlage 100 weist an seinem Arbeitskopf 119 eine Greifeinrichtung auf, mit welcher der Handhabungsroboter 103 Versteifungselemente 127 von innen greifen und rutschsicher halten kann. Die Versteifungselemente 127 gemäß dem zweiten Ausführungsbeispiel sind separate, vorzugsweise geschlossene, Bügel. Der erste Handhabungsroboter 103 ist dazu ausgebildet, die bügelförmigen Versteifungselemente 127 mit dem als Greifeinrichtung ausgebildeten Arbeitskopf 119 von einer Bevorratung zu entnehmen, in Anlage mit den Ringelementen 13 auf der Greifeinrichtung 11 der Anlage 100 zu bringen, und dort solange zu stellen, bis der zweite Handhabungsroboter 121 mit seinem als Schweißeinrichtung ausgebildeten Arbeitskopf 125, beispielsweise als Schweißrad, die Versteifungselemente 127 mit den Ringelementen 13 verbunden hat. Der erste Handhabungsroboter 103 und der zweite Handhabungsroboter 121 sind gemäß Figuren 3a, b auf einer die Greifeinrichtung 11 und die (nicht dargestellte) drehbare Plattform 9 (Figur 1a) umgebenden ringförmigen Plattform 105 angeordnet. Wahlweise könnten hier aber auch Tragstrukturen wie beispielsweise in Figur 1a, b gewählt werden, genauso wie bei dem ersten Ausführungsbeispiel der Anlage 1 in den Figuren 1a, b eine Tragstruktur wie die hier abgebildete Plattform 105 gewählt werden könnte.

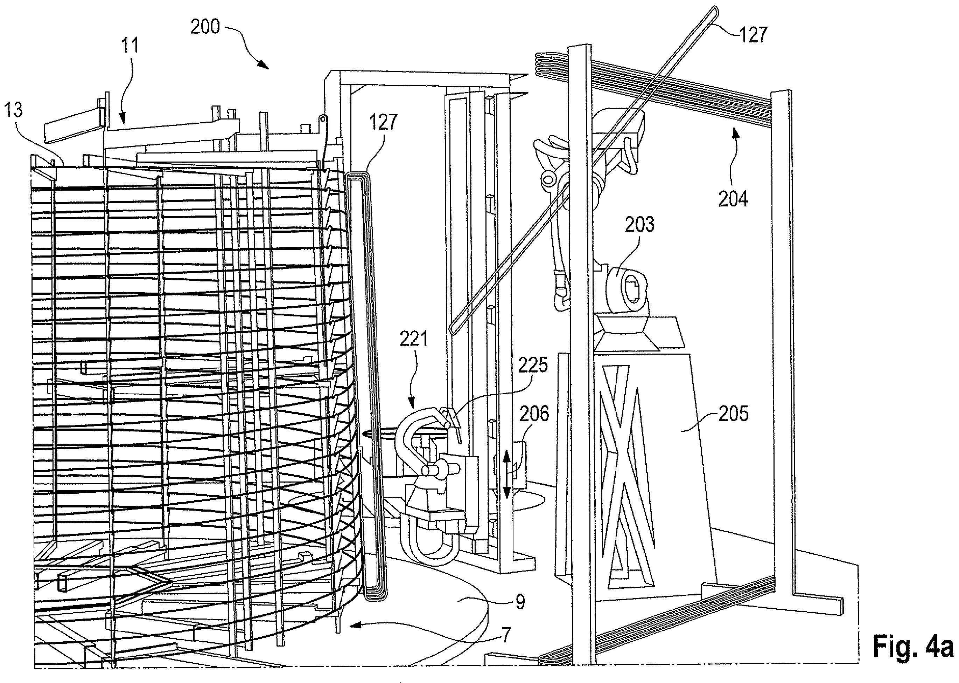

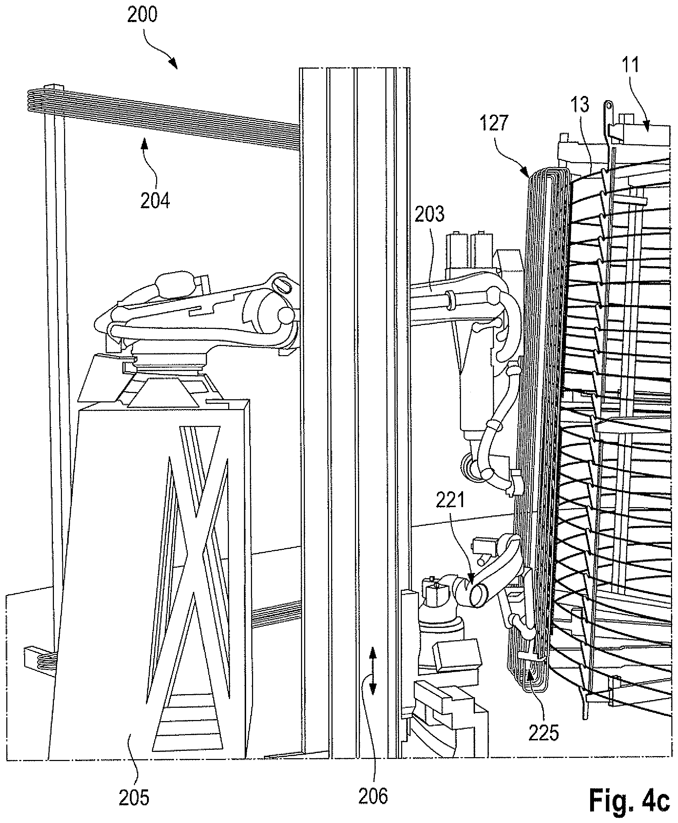

Die genaue Ausführung der Bevorratung ist in diesem Ausführungsbeispiel nicht dargestellt aus Gründen der Übersichtlichkeit. Sie kann beispielsweise eine Bevorratung wie die Bevorratung 204 aus dem nachfolgend dargestellten Ausführungsbeispiel der Figuren 4a bis 4c sein.

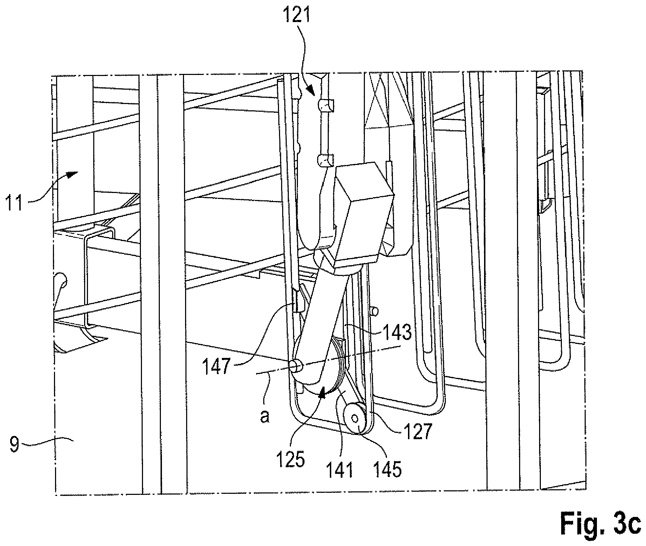

Im Zustand gemäß Figur 3a ist der zweite Handhabungsroboter 121 derart positioniert, ein Versteifungselement 127 mit einem der Ringelemente 13 im oberen Bereich des zu erstellenden Bewehrungskorbes verbunden wird. Demgegenüber ist in Figur 3b der zweite Handhabungsroboter 121 so positioniert, dass der Arbeitskopf 125 das Versteifungselement 127 in einem unteren Bereich des herzustellenden Bewehrungskorbes in der Greifeinrichtung 11 mit einem Ringelement verbinden kann oder alternativ eine Verschweißung an dem Versteifungselement 127 selbst durchführt. Der erste Handhabungsroboter 103 hält während dieser Vorgänge das Versteifungselement 127 rutschsicher in Position. Dies geschieht mittels schwenkbarer Koppelglieder, die an gegenüberliegenden Enden des Arbeitskopfes 119 angeordnet sind. Figur 3c zeigt Koppelglied 141, wenngleich verdeckt durch den Arbeitskopf 125 des zweiten Handhabungsroboters 121. Das Koppelglied mit seinen Bestandteilen ist in weiteren Einzelheiten auch in einem nachfolgend noch zu erörternden Ausführungsbeispiel ebenfalls erläutert.

Das Koppelglied 141, was in Figur 3c zu sehen ist, weist an einem ersten Ende eine Führungsrolle 145 auf, die dazu eingerichtet ist, in die Umbiegung, mithin Ecke, eines Versteifungselements 127 eingesetzt zu werden und das Versteifungselement dort zu erfassen. An einem der Führungsrolle 145 gegenüberliegenden Ende des Koppelglieds 141 ist ein Stützabschnitt 147 angeordnet, der dazu eingerichtet ist, bei einem Verschwenken des Koppelglieds 141 gemeinsam mit der Führungsrolle 145 eine Spreizkraft auf das Versteifungselement 127 auszuüben, die groß genug ist, um das Versteifungselement 127 rutschsicher halten zu können.

Das Koppelglied 141 ist vorzugsweise mittels eines Aktuators 143 verfahrbar.

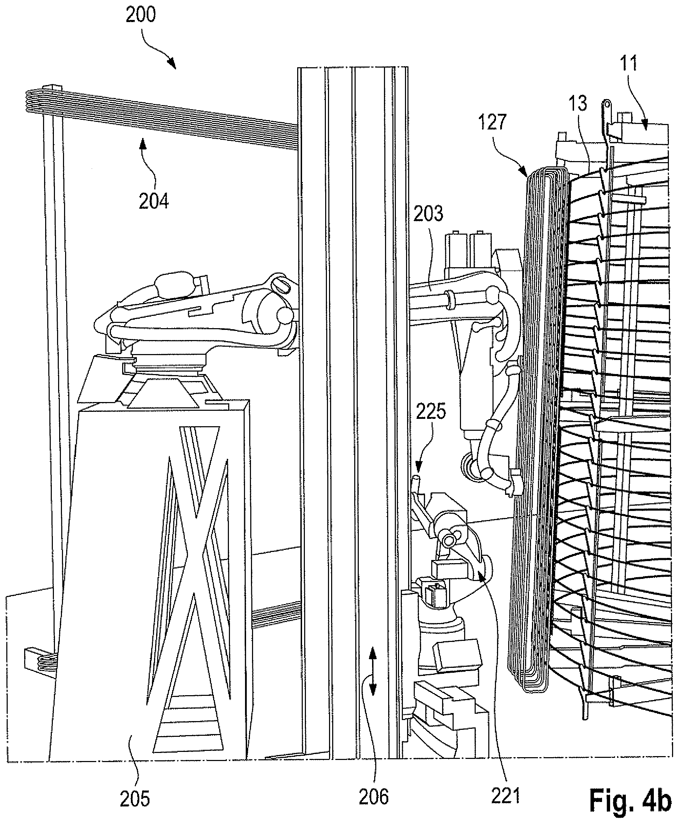

In den Figuren 4a bis 4c ist eine Anlage 200 zur Herstellung von Bewehrungskörben gemäß einem dritten Ausführungsbeispiel dargestellt. Das dritte Ausführungsbeispiel ist konstruktiv dem zweiten Ausführungsbeispiel sehr ähnlich, es wird daher nur auf konstruktive Unterschiede hingewiesen. Im Unterschied zu der Anlage 100 weist die Anlage 200 ein höhenverstellbares Portal 206 auf, an dem ein zweiter Handhabungsroboter 221 höhenbeweglich angeordnet ist. Ein erster Handhabungsroboter 203 ist separat zum zweiten Handhabungsroboter 221 auf einer Tragstruktur 205 gelagert. Die Anlage 200 weist eine Bevorratung 204 von Versteifungselementen 127 auf. Der erste Handhabungsroboter 203 ist dazu eingerichtet, diese Versteifungselemente 127 von der Bevorratung 204 zu entnehmen und gegen die Ringelemente 13, die auf der Greifeinrichtung 11 gehalten werden und in dem Aufnahmebereich 7 auf einer drehbaren Plattform 9 angeordnet sind, zu stellen. In Figur 4a ist dieser Entnahmevorgang beispielhaft dargestellt. Figur 4b, die die gleiche Anlage 200 aus Figur 4a in einem anderen Blickwinkel zeigt, hat der erste Handhabungsroboter 203 ein zuvor entnommenes Versteifungselement 127 in Anlage mit den Ringelementen 13 auf der Greifeinrichtung 11 gebracht. Ausgehend von dem Betriebszustand in Figur 4b ist der zweite Handhabungsroboter 221 dazu eingerichtet, entlang des Portals 206 in der Höhe an die entsprechende Stelle zu verfahren, und sodann einen Arbeitskopf 225 in Position zu bringen, welcher eine Verbindung des Versteifungselements 127 mit jeweils einem Abschnitt eines Ringelements 13 an verschiedenen Höhen entlang des herzustellenden Bewehrungskorbes herstellt.

Bei den hierin vorstehend gezeigten Ausführungsbeispielen waren die im Wesentlichen horizontal ausgerichteten Ringelemente 13 die Ringelemente für eine sogenannte Innen-Helix des herzustellenden Bewehrungskorbes. Es liegt ebenso im Rahmen der Erfindung, dass diese Ringelemente eine sogenannte Außenhelix darstellen, wobei dann die Versteifungselemente bezogen auf diese Ringelemente innenliegend angeordnet werden könnten. Entsprechende Umstellungen der Handhabungsroboterpositionen werden aus Gründen der übersichtlichen Darstellung hier nicht in allen Kombinationen aufgezeigt.

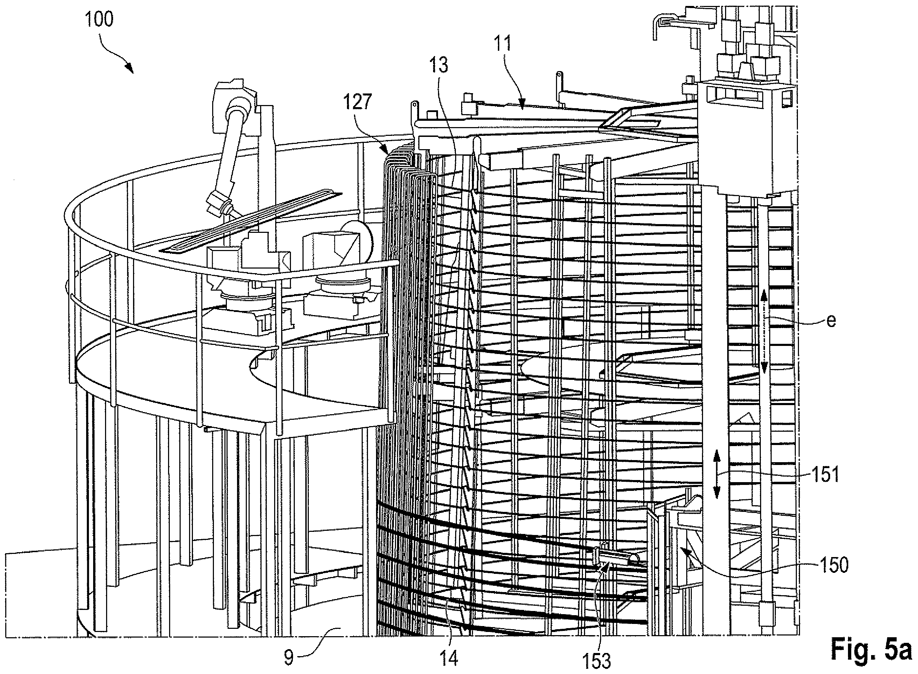

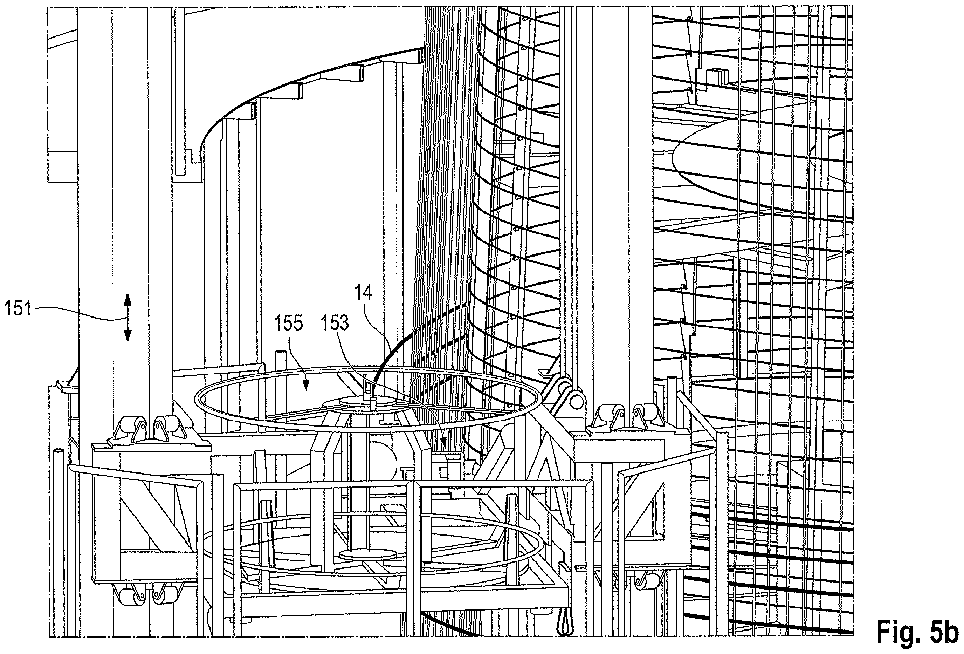

Um beim bislang abgebildeten Ausführungsbeispiel einer Innen-Helix für die im Wesentlichen horizontal ausgerichteten Ringelemente 13 zu bleiben, ist es im Rahmen eines weiteren Ausführungsbeispiels, welches als Zusatz für alle zuvor gezeigten Ausführungsbeispiele zu verstehen ist, beispielhaft aber nur anhand des Ausführungsbeispiels aus den Figuren 3a bis 3c bebildert wird, vorgesehen, dass die im Wesentlichen horizontal ausgerichteten Ringelemente 13 einen ersten Satz Ringelemente darstellen. In den Figuren 5a und b ist zusätzlich eine automatische Wickeleinheit 150 in der Anlage 100 vorgesehen , welche dazu eingerichtet ist, auf einer bezogen auf den ersten Satz Ringelemente gegenüberliegenden Seite der Versteifungselemente 127 (oder auch der wendelförmig ausgebildeten Versteifungselemente 27 in dem ersten Ausführungsbeispiel) einen zweiten Satz im Wesentlichen horizontal ausgerichteter Ringelemente 14 bereitzustellen. Im gezeigten Ausführungsbeispiel der Figuren 5a und 5b weist die Wickeleinheit 150 eine Führungseinrichtung 153 auf, welche dazu eingerichtet ist, ein Endlosmaterial, welches das gleiche Endlosmaterial für die wendeiförmig ausgebildeten Versteifungselemente 27 der Figuren 1a bis 2g sein kann, ring- bzw. schraubenförmig um die Versteifungselemente 127 herum zu legen. Hierzu wird die Wickeleinheit 150 an einem Portal 151 höhenbeweglich verfahren, während die Plattform 9 um eine vertikal ausgerichtete Achse e gemeinsam mit der Greifeinrichtung 11, den Ringelementen 13 und den Versteifungselementen 127 gedreht wird. Wie sich aus Figur 5b ersehen lässt, wird das Endlosmaterial vorzugsweise von einer Zuführeinrichtung in Form einer Bevorratung 155 aus bereitgestellt, die eine trommelartige Aufspulung des Endlosmaterials bereithalten kann. Die Führungseinrichtung 153 kann mehrere Führungsrollen aufweisen, die ein gezieltes Abgeben des Endlosmaterials zum Ausbilden der Ringe 14 ermöglichen. Die Wickeleinheit 150 ist vorzugsweise datenleitend mit einer zentralen elektronischen Steuereinheit, beispielsweise der vorstehend erwähnten, verbunden, welche die Arbeit der verschiedenen Anlagenkomponenten wie Handhabungsroboter, Wickeleinheit und drehbare Plattform koordiniert. Diese Steuereinheit ist in Figur 1a angedeutet.

Die Wickeleinheit, die in den Figuren 5a, b dargestellt ist, kann beispielsweise auch die Zuführeinrichtung 15 sein, welche in dem Ausführungsbeispiel der Figuren 1a bis 2g zum Bereitstellen des Endlosmaterials 17 benutzt wird.

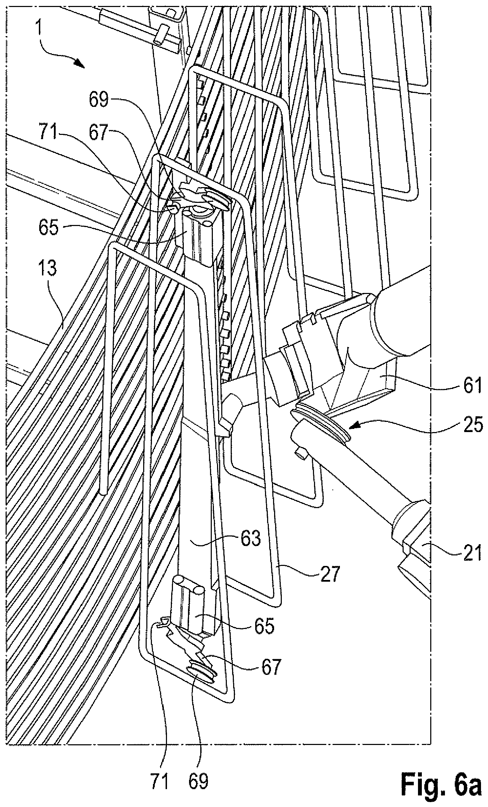

Im Folgenden wird anhand eines weiteren Ausführungsbeispiels eine zusätzliche beispielhafte Kombinationsmöglichkeit von Merkmalen der vorstehend beschriebenen verschiedenen Ausführungsbeispiele in den Figuren 6a bis 6c dargestellt. Die Anlage 1 gemäß dem Ausführungsbeispiel aus den Figuren 1a bis 2g weist vorzugsweise einen weiteren Handhabungsroboter 61 auf. Der Handhabungsroboter 61 ist insbesondere identisch ausgebildet wie der erste Handhabungsroboter 103 aus dem Ausführungsbeispiel der Figuren 3a bis c. Wenngleich es bei der Anlage 1 nicht notwendig ist, vorgefertigte Versteifungselemente aus einer Bevorratung bereitzustellen, kann dieser Handhabungsroboter 61 auch in der Anlage 1 mit Vorteil genutzt werden, indem er zum Stabilisieren der bereits ausgeformten wendelförmigen Versteifungselemente 27 in diese eingreift und solange rutschsicher hält, bis der zweite Handhabungsroboter 21 die erforderlichen Verbindungsarbeiten zwischen den Versteifungselementen 27 und den Ringelementen 13 durchgeführt hat.

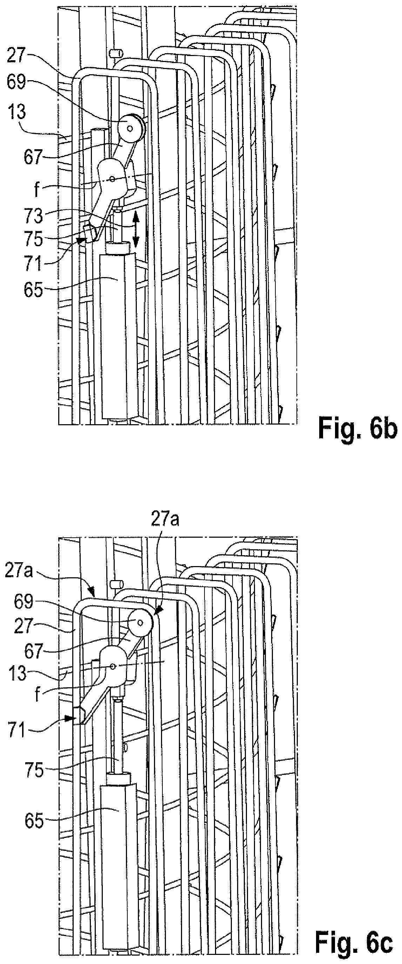

In den Figuren 6b bis c sind bezüglich des in Figur 6a sichtbaren, als Greifeinrichtung ausgebildeten Arbeitskopfes 63 des Handhabungsroboters 61 weitere Details gezeigt, die bei dem Arbeitskopf 119 aus dem Ausführungsbeispiel der Figuren 3a bis c aus Gründen der einfachen Darstellung genauso wie bei dem Ausführungsbeispiel der Figuren 4a bis c ausgelassen wurden. Die Koppeleinrichtung, hier Bezugszeichen 67 anstelle Bezugszeichen 141, ist mittels eines Aktuators 65 verfahrbar an dem Arbeitskopf 63 angeordnet. Der Stützabschnitt hat nun das Bezugszeichen 71, und die Führungsrolle das Bezugszeichen 69. Die Funktionsweise des Koppelgliedes ist exemplarisch in den Figuren 6b, c dargestellt. Zunächst wird die Greifeinrichtung 63 in den in Figur 6a gezeigten Zustand verbracht. In diesem Zustand befindet sich das in Figur 6b gezeigte Koppelglied 67 im "Innenbereich" einer Ecke einer Wendel der Versteifungselemente 27. Von dieser Position aus wird mittels des Aktuators 65 eine Kolbenstange 75 in Richtung des Pfeils 73 ausgefahren. Dies hat nach Figur 6c zur Folge, dass die Führungsrolle 69 des Koppelglieds an einem Stirnbereich 27a des Versteifungselements 27 zur Anlage kommt und bei fortgesetzter Bewegung der Kolbenstange 75 in Richtung einer der Umbiegungs-Ecken rollt. In Figur 6c ist die Führungsrolle 69 in der Umbiegungs-Ecke 27b angelangt. Die Kolbenstange 75 ist soweit mittels des Aktuators 65 verfahren, dass der am gegenüberliegenden Ende des Koppelglieds 67, bezogen auf die Führungsrolle 69, angeordnete Stützabschnitt 71 in Anlage mit einem im Wesentlichen vertikalen Abschnitt 27c des Versteifungselements 27 steht. Der Aktuator 65 ist in dieser Position in der Lage, durch weiteres Herausdrücken der Kolbenstange 75 eine Spreizkraft auf das Versteifungselement 27 auszuüben, mittels derer dieses fixiert und stabilisiert wird. In dieser Position ist ein Verbinden der Versteifungselemente in unmittelbarer Nachbarschaft zu dem gehaltenen Versteifungselement 27, einschließlich des Versteifungselements 27 selbst, durch den zweiten Handhabungsroboter 21 möglich.

Aus Gründen der Übersichtlichkeit ist eine Federrückstellung des Koppelglieds und verschiedene Sensormittel Ausrüstung der Anlagen nicht dargestellt, die einen fehler- und kollisionsfreien Betreib der Anlagen unterstützen.

## Patentansprüche

1. Anlage (1; 100; 200) zur Herstellung von Bewehrungskörben für Turmsegmente von Windenergieanlagen, wobei ein Bewehrungskorb jeweils im Wesentlichen horizontal ausgerichtete Ringelemente (13, 14) und im Wesentlichen vertikal ausgerichtete Versteifungselemente (27; 127) aufweist, und die Anlage aufweist:
- einen Aufnahmebereich (7) welcher dazu angepasst ist, die, vorzugsweise inneren, im Wesentlichen horizontal ausgerichteten Ringelemente (13) des Bewehrungskorbs aufzunehmen,
- einen ersten Handhabungsroboter (3; 61; 103; 203) zum Bereitstellen und Positionieren der Versteifungselemente, und
- einen zweiten Handhabungsroboter (21; 121; 221) zum Verbinden der Ringelemente mit den Versteifungselementen,
**dadurch gekennzeichnet, dass** zur Herstellung von Bewehrungskörben mit aus einem wendeiförmig gebogenen Endlosmaterial (17) ausgebildeten Versteifungselementen (27), der erste Handhabungsroboter (3) Biegemittel aufweist, und mit einer Zuführeinheit (15) zusammenwirkt, die den Biegemitteln das Endlosmaterial zuführt, wobei die Biegemittel dazu eingerichtet sind, das zugeführte Endlosmaterial derart zu biegen, dass die Versteifungsmittel daraus wendeiförmig ausgebildet werden.

2. Anlage (1; 100; 200) zur Herstellung von Bewehrungskörben für Turmsegmente von Windenergieanlagen, wobei ein Bewehrungskorb jeweils im Wesentlichen horizontal ausgerichtete Ringelemente (13, 14) und im Wesentlichen vertikal ausgerichtete Versteifungselemente (27; 127) aufweist, und die Anlage aufweist:
- einen Aufnahmebereich (7) welcher dazu angepasst ist, die, vorzugsweise inneren, im Wesentlichen horizontal ausgerichteten Ringelemente (13) des Bewehrungskorbs aufzunehmen,
- einen ersten Handhabungsroboter (3; 61; 103; 203) zum Bereitstellen und Positionieren der Versteifungselemente, und
- einen zweiten Handhabungsroboter (21; 121; 221) zum Verbinden der Ringelemente mit den Versteifungselementen,
**dadurch gekennzeichnet, dass** zur Herstellung von Bewehrungskörben mit als separate, vorzugsweise geschlossene, Bügel ausgebildeten Versteigungselementen (127), der erste Handhabungsroboter (103; 203) Greifmittel zum rutschsicheren Fassen und Entnehmen der Versteifungselemente (127) von einer Bevorratungseinheit (204) aufweist.

3. Anlage nach Anspruch 1 oder 2,
**gekennzeichnet durch** eine elektronische Steuereinheit (10), welche dazu eingerichtet ist, den ersten und zweiten Handhabungsroboter (3, 21; 61; 103; 121; 203; 221) zum koordinierten Bereitstellen der Versteifungselemente und Verbinden der Versteifungselemente mit den Ringelementen zu steuern.

4. Anlage nach einem der vorstehenden Ansprüche,
**dadurch gekennzeichnet, dass** der Aufnahmebereich auf einer drehbaren Plattform (9) angeordnet ist, und vorzugsweise der erste und zweite Handhabungsroboter benachbart zu der Plattform angeordnet sind.

5. Anlage nach einem der vorstehenden Ansprüche,
wobei der Aufnahmebereich zum Zusammenwirken mit einer Greifeinrichtung (11) zum Handhaben eines Bewehrungskorbs eingerichtet ist.

6. Anlage nach einem der vorstehenden Ansprüche,
**dadurch gekennzeichnet, dass** der erste Handhabungsroboter (3; 61; 103; 203) dazu eingerichtet ist, die Versteifungselemente im Wesentlichen vertikal ausgerichtet mit den Ringelementen in Anlage zu bringen.

7. Anlage (1) nach Anspruch 1 oder einem der Ansprüche 3 bis 6 wenn vom Anspruch 1 abhängig, **dadurch gekennzeichnet, dass** die Biegemittel Umlenkrollen (31 a, b, c) aufweisen, zwischen welchen das Endlosmaterial hindurchgeführt wird, wobei die Positionen der Umlenkrollen relativ zueinander veränderbar sind.

8. Anlage (1) nach Anspruch 1 oder einem der Ansprüche 3 bis 7 wenn vom Anspruch 1 abhängig, wobei die Biegemittel stationär an der Anlage angeordnet sind, wobei ein Handhabungsroboter ausschließlich die Handhabung der gebogenen Stahldrähte übernimmt.

9. Anlage nach Anspruch 2 oder einem der Ansprüche 3 bis 6 wenn vom Anspruch 2 abhängig, **dadurch gekennzeichnet, dass** die Greifmittel ein erstes und zweites schwenkbares Koppelglied (141) aufweisen, welches dazu eingerichtet ist, das Versteifungselement (127) in jeweils mindestens einer Ecke mittels Verschwenken zu ergreifen, wobei vorzugsweise die Koppelglieder (141) jeweils eine Führungsrolle (145) zum Greifen des Versteifungselements vorzugsweise von innen in einer Ecke aufweisen, sowie vorzugsweise einen Stützabschnitt (147) oder eine weitere Rolle an einem gegenüberliegenden Ende des Koppelglieds, derart angeordnet, dass beim Verschwenken des Koppelglieds eine ausreichende Spreizkraft auf das Versteifungselement ausgeübt wird, dass der erste Handhabungsroboter (103) das Versteifungselement (127) rutschsicher heben, senken, verfahren und frei im Raum rotieren kann.

10. Anlage (100; 200) nach einem der vorstehenden Ansprüche,
**dadurch gekennzeichnet, dass** der zweite Handhabungsroboter (121; 221) einen schwenkbaren Arbeitskopf (125; 225) aufweist, an welchem ein Verbindemittel angeordnet ist, ausgewählt aus der Liste bestehend aus:
- Klebstoffabgabevorrichtung,
- Schweißvorrichtung,
- Lötvorrichtung,
- Vorrichtung zum automatischen Verdrillen von Metalldrähten.

11. Anlage (1; 100; 200) nach einem der vorstehenden Ansprüche,
wobei die Ringelemente (13) in dem Aufnahmebereich (7) ein erster Satz Ringelemente sind, und die Anlage eine automatische Wickeleinheit (150) zum Bereitstellen des ersten Satzes und eines zweiten Satzes im Wesentlichen horizontal ausgerichteter, vorzugsweise äußerer, Ringelemente (14) aufweist, wobei die Ringelemente (14) als separate, vorzugsweise geschlossene, Ringe ausgebildet sind, oder aus einem wendelförmig gebogenen Endlosmaterial ausgebildet sind.

12. Anlage (1; 100; 200) nach Anspruch 11, **dadurch gekennzeichnet, dass** die automatische Wickeleinheit (150) eine Führungseinrichtung (153) aufweist, und mit einer Zuführeinheit (155) zusammenwirkt, die der Führungseinrichtung (153) das Endlosmaterial zuführt, wobei die Führungseinrichtung dazu eingerichtet ist, das zugeführte Endlosmaterial derart zu zuführen, dass die Ringelemente wendeiförmig ausgebildet wird.

13. Anlage (1; 100; 200) nach Anspruch 11 oder 12, **dadurch gekennzeichnet, dass** der zweite Handhabungsroboter (21; 121; 221) dazu eingerichtet ist, den zweiten Satz Ringelemente (14) mit den Versteifungselementen (27; 127) zu verbinden.

14. Anlage (1; 100; 200)nach einem der Ansprüche 11 bis 13, **dadurch gekennzeichnet, dass** die elektronische Steuereinheit (10) dazu eingerichtet ist, sämtliche Handhabungsroboter der Anlage, sowie automatische Zuführeinheit und drehbare Plattform, zum koordinierten Bereitstellen der Ringelemente (14) Versteifungselemente (27, 127) und Verbinden der Versteifungselemente mit den Ringelementen (14) zu steuern.

## Claims

1. System (1; 100; 200) for producing reinforcing cages for wind turbine tower segments, wherein a reinforcing cage has in each case essentially horizontally oriented ring segments (13, 14) and essentially vertically oriented stiffening elements (27; 127), the system having:
- a receiving area (7) which is adapted so as to receive the preferably inner, essentially horizontally oriented ring segments (13) of the reinforcing cage,
- a first handling robot (3; 61; 103; 203) for supplying and positioning the stiffening elements, and
- a second handling robot (21; 121; 221) for connecting the ring elements to the stiffening elements,
**characterized in that** for producing reinforcing cages with stiffening elements (27) formed from a helically bent endless material (17), the first handling robot (3) has bending means and interacts with a feed unit (15) which feeds the endless material to the bending means, wherein the bending means are configured so as to bend the fed endless material in such a way that the stiffening means are formed helically.

2. System (1; 100; 200) for producing reinforcing cages for wind turbine tower segments, wherein a reinforcing cage has in each case essentially horizontally oriented ring segments (13, 14) and essentially vertically oriented stiffening elements (27; 127), the system having:
- a receiving area (7) which is adapted so as to receive the preferably inner, essentially horizontally oriented ring segments (13) of the reinforcing cage,
- a first handling robot (3; 61; 103; 203) for supplying and positioning the stiffening elements, and
- a second handling robot (21; 121; 221) for connecting the ring elements to the stiffening elements,
**characterized in that** for producing reinforcing cages with stiffening elements (127) designed as separate, preferably closed brackets, the first handling robot (103; 203) has gripping means for non-slip grasping and removal of the stiffening elements (127) from a stocking unit (204).

3. System according to Claim 1 or 2, **characterized by** an electronic control unit (10) which is configured so as to control the first and second handling robots (3, 21; 61; 103; 121; 203; 221) for supplying the stiffening elements in a coordinated manner and for connecting the stiffening elements to the ring elements.

4. System according to one of the preceding claims, **characterized in that** the receiving area is arranged on a rotatable platform (9) and that the first and second handling robots are arranged preferably adjacent to the platform.

5. System according to one of the preceding claims, wherein the receiving area is configured so as to interact with a gripping device (11) for handling a reinforcing cage.

6. System according to one of the preceding claims, **characterized in that** the first handling robot (3; 61; 103; 203) is configured so as to bring the stiffening elements to bear against the ring elements in an essentially vertical orientation.

7. System (1) according to Claim 1, or to any one of Claims 3 to 6 if dependent on Claim 1, **characterized in that** the bending means have deflecting rollers (31 a, b, c) between which the endless material is passed, wherein the positions of the deflecting rollers relative to one another can be modified.

8. System (1) according to Claim 1, or to any one of Claims 3 to 7 if dependent on Claim 1, wherein the bending means are arranged so as to be stationary on the system, wherein a handling robot undertakes the handling of the bent steel wires.

9. System (1) according to Claim 2, or to any one of Claims 3 to 6 if dependent on Claim 2, **characterized in that** the gripping means have a first and second pivotable coupling link (141) which is configured so as to grip the stiffening element (127) in each case at at least one corner by means of pivoting, wherein the coupling links (141) preferably each have a guide roller (145) for gripping the stiffening element, preferably on the inside, at a corner, and preferably a supporting section (147) or a further roller at an opposite end of the coupling link, arranged in such a way that, when the coupling link is pivoted, a sufficient spreading force is exerted on the stiffening element to allow the first handling robot (103) to lift, lower, displace and rotate freely in space the stiffening element (127) in a non-slip manner.

10. System (100; 200) according to one of the preceding claims, **characterized in that** the second handling robot (121; 221) has a pivotable working head (125; 225) on which a connecting means is arranged which is selected from a list consisting of:
- adhesive dispensing device,
- welding device,
- soldering device,
- device for automatically twisting metal wires.

11. System (1; 100; 200) according to one of the preceding clams, wherein the ring elements (13) in the receiving area (7) are a first set of ring elements and the system has an automatic winding unit (150) for supplying the first set and a second set of essentially horizontally oriented, preferably outer ring elements (14), wherein the ring elements (14) are designed as separate, preferably closed rings or are designed as helically bent endless material.

12. System (1; 100; 200) according to Claim 11, **characterized in that** the automatic winding unit (150) has a guide device (153) and interacts with a feed unit (155) which feeds the endless material to the guide device (153), wherein the guide device is configured so as to feed the fed endless material in such a way that the ring elements are formed helically.

13. System (1; 100; 200) according to Claim 11 or 12, **characterized in that** the second handling robot (21; 121; 221) is configured so as to connect the second set of ring elements (14) to the stiffening elements (27; 127).

14. System (1; 100; 200) according to one of Claims 11 to 13, **characterized in that** the electronic control unit (10) is configured so as to control all the handling robots of the system, and the automatic feed unit and rotatable platform, in order to supply in a coordinated fashion the ring elements (14) and stiffening elements (27, 127) and to connect the stiffening elements to the ring elements (14).

## Revendications

1. Installation (1 ; 100 ; 200) pour la fabrication de cages d'armature pour des segments de tour d'éoliennes, dans laquelle une cage d'armature présente respectivement des éléments annulaires (13, 14) orientés sensiblement horizontalement et des éléments de renforcement (27 ; 127) orientés sensiblement verticalement, et l'installation présente :
- une zone de réception (7) qui est adaptée afin de recevoir les éléments annulaires (13) orientés sensiblement horizontalement, de préférence intérieurs de la cage d'armature,
- un premier robot de manipulation (3 ; 61 ; 103 ; 203) pour la mise à disposition et le positionnement des éléments de renforcement, et
- un second robot de manipulation (21 ; 121 ; 221) pour la liaison des éléments annulaires avec les éléments de renforcement,
**caractérisée en ce que**
pour la fabrication de cages d'armature avec des éléments de renforcement (27) réalisés en un matériau sans fin (17) plié en forme d'hélice, le premier robot de manipulation (3) présente des moyens de flexion et coopère avec une unité d'alimentation (15) qui fournit aux moyens de flexion le matériau sans fin, dans laquelle les moyens de flexion sont aménagés afin de plier le matériau sans fin amené de telle manière que les moyens de renforcement soient réalisés à partir de celui-ci en forme d'hélice.

2. Installation (1 ; 100 ; 200) pour la fabrication de cages d'armature pour des segments de tour d'éoliennes, dans laquelle une cage d'armature présente respectivement des éléments annulaires (13, 14) orientés sensiblement horizontalement et des éléments de renforcement (27 ; 127) orientés sensiblement verticalement et l'installation présente :
- une zone de réception (7) qui est adaptée afin de recevoir les éléments annulaires (13) orientés sensiblement horizontalement, de préférence intérieurs de la cage d'armature,
- un premier robot de manipulation (3 ; 61 ; 103 ; 203) pour la mise à disposition et le positionnement des éléments de renforcement, et
- un second robot de manipulation (21 ; 121 ; 221) pour la liaison des éléments annulaires avec les éléments de renforcement,
**caractérisée en ce que**
pour la fabrication de cages d'armature avec des éléments de renforcement (127) réalisés comme des étriers séparés, de préférence fermés, le premier robot de manipulation (103 ; 203) présente des moyens de préhension pour la saisie et le retrait antidérapants des éléments de renforcement (127) d'une unité de stockage (204).

3. Installation selon la revendication 1 ou 2, **caractérisée par** une unité de commande électronique (10) qui est aménagée afin de commander les premier et second robots de manipulation (3, 21 ; 61 ; 103 ; 121 ; 203 ; 221) pour la mise à disposition coordonnée des éléments de renforcement et la liaison des éléments de renforcement avec les éléments annulaires.

4. Installation selon l'une des revendications précédentes, **caractérisée en ce que** la zone de réception est agencée sur une plateforme rotative (9) et de préférence les premier et second robots de manipulation sont agencés de manière contiguë à la plateforme.

5. Installation selon l'une des revendications précédentes, dans laquelle la zone de réception est aménagée pour la coopération avec un dispositif de préhension (11) pour la manipulation d'une cage d'armature.

6. Installation selon l'une des revendications précédentes, **caractérisée en ce que** le premier robot de manipulation (3 ; 61 ; 103 ; 203) est aménagé afin d'amener en appui les éléments de renforcement orientés sensiblement verticalement avec les éléments annulaires.

7. Installation (1) selon la revendication 1 ou l'une des revendications 3 à 6 lorsqu'elle dépend de la revendication 1, **caractérisée en ce que** les moyens de flexion présentent des rouleaux de déviation (31a, b, c), entre lesquels le matériau sans fin est passé, dans laquelle les positions des rouleaux de déviation sont modifiables les unes par rapport aux autres.

8. Installation (1) selon la revendication 1 ou l'une des revendications 3 à 7, lorsqu'elle dépend de la revendication 1, dans laquelle les moyens de flexion sont agencés de manière stationnaire sur l'installation, dans laquelle un robot de manipulation entreprend exclusivement la manipulation des fils d'acier pliés.

9. Installation selon la revendication 2 ou l'une des revendications 3 à 6, lorsqu'elle dépend de la revendication 2, **caractérisée en ce que** les moyens de préhension présentent des premier et second organes de couplage (141) pivotants qui sont aménagés afin de saisir l'élément de renforcement (127) dans respectivement au moins un coin par pivotement, dans laquelle de préférence les organes de couplage (141) présentent respectivement un rouleau de guidage (145) pour la saisie de l'élément de renforcement de préférence de l'intérieur dans un coin, ainsi que de préférence une section d'appui (147) ou un autre rouleau sur une extrémité en regard de l'organe de couplage, disposé de telle manière que, lors du pivotement de l'organe de couplage, une force d'écartement suffisante soit exercée sur l'élément de renforcement, que le premier robot de manipulation (103) puisse lever, abaisser, déplacer et tourner librement dans l'espace l'élément de renforcement (127) de manière antidérapante.

10. Installation (100 ; 200) selon l'une des revendications précédentes, **caractérisée en ce que** le second robot de manipulation (121 ; 221) présente une tête de travail pivotante (125 ; 225), sur laquelle est disposé un moyen de liaison, sélectionné dans la liste composée de :
- dispositif de sortie de colle,
- dispositif de soudage,
- dispositif de brasage,
- dispositif pour la torsion automatique de fils métalliques.

11. Installation (1 ; 100 ; 200) selon l'une des revendications précédentes, dans laquelle les éléments annulaires (13) dans la zone de réception (7) sont un premier jeu d'éléments annulaires et l'installation présente une unité d'enroulement (150) automatique pour la mise à disposition du premier jeu et d'un second jeu d'éléments annulaires (14) de préférence extérieurs, orientés sensiblement horizontalement, dans laquelle les éléments annulaires (14) sont réalisés comme des anneaux séparés, de préférence fermés ou d'un matériau sans fin plié en forme d'hélice.

12. Installation (1 ; 100 ; 200) selon la revendication 11, **caractérisée en ce que** l'unité d'enroulement automatique (150) présente un dispositif de guidage (153) et coopère avec une unité d'alimentation (155) qui fournit au dispositif de guidage (153) le matériau sans fin, dans laquelle le dispositif de guidage est aménagé afin de fournir le matériau sans fin amené de telle manière que les éléments annulaires soient réalisés en forme d'hélice.

13. Installation (1 ; 100 ; 200) selon la revendication 11 ou 12, **caractérisée en ce que** le second robot de manipulation (21 ; 121 ; 221) est aménagé afin de relier le second jeu d'éléments annulaires (14) avec les éléments de renforcement (27 ; 127) .

14. Installation (1 ; 100 ; 200) selon l'une des revendications 11 à 13, **caractérisée en ce que** l'unité de commande électronique (10) est aménagée afin de commander tous les robots de manipulation de l'installation, ainsi que l'unité d'alimentation automatique et la plateforme rotative pour la mise à disposition cordonnée des éléments annulaires (14) et des éléments de renforcement (27, 127) et la liaison des éléments de renforcement avec les éléments annulaires (14).
